# EUROPEAN PATENT SPECIFICATION

(11) **EP 1 176 289 B1**
(45) Date of publication and mention of the grant of the patent: **28.04.2004**
(21) Application number: 01117845.6
(22) Date of filing: 23.07.2001
(51) Int. Cl.: F01N 3/08, F01N 3/20, F02D 41/02, B01D 53/94, F01N 3/36

(54) **Emission control system of internal combustion engine**
Abgasemissions-Steuerungssystem für Verbrennungsmotoren
Système de commande de l'émission des gaz d'échappement pour moteurs à combustion interne

(30) Priority: 24.07.2000 JP 2000223051; 12.07.2001 JP 2001212889
(43) Date of publication of application: 30.01.2002
(73) Proprietor: TOYOTA JIDOSHA KABUSHIKI KAISHA, Aichi-ken 471-8571 (JP)
(72) Inventor: Shibata, Daisuke, c/oToyota Jidosha K. K., Toyota-shi, Aichi-ken, 471-8571 (JP); Matsushita, Souichi, c/oToyota Jidosha K. K., Toyota-shi, Aichi-ken, 471-8571 (JP); Tsukasaki, Yukihiro, c/oToyota Jidosha K. K., Toyota-shi, Aichi-ken, 471-8571 (JP); Matsuoka, Hiroki, c/oToyota Jidosha K. K., Toyota-shi, Aichi-ken, 471-8571 (JP); Hayashi, Kotaro, c/oToyota Jidosha K. K., Toyota-shi, Aichi-ken, 471-8571 (JP); Ishiyama, Shinobu, c/oToyota Jidosha K. K., Toyota-shi, Aichi-ken, 471-8571 (JP); Ohtsubo, Yasuhiko, c/oToyota Jidosha K. K., Toyota-shi, Aichi-ken, 471-8571 (JP); Magarida, Naofumi, c/oToyota Jidosha K. K., Toyota-shi, Aichi-ken, 471-8571 (JP); Kobayashi, Masaaki, c/oToyota Jidosha K. K., Toyota-shi, Aichi-ken, 471-8571 (JP); Negami, Akihiko, c/oToyota Jidosha K. K., Toyota-shi, Aichi-ken, 471-8571 (JP); Oda, Tomihisa, c/oToyota Jidosha K. K., Toyota-shi, Aichi-ken, 471-8571 (JP); Harada, Yasuo, c/oToyota Jidosha K. K., Toyota-shi, Aichi-ken, 471-8571 (JP); Ono, Tomoyuki, c/oToyota Jidosha K. K., Toyota-shi, Aichi-ken, 471-8571 (JP)
(74) Representative: Leson, Thomas Johannes Alois, Dipl.-Ing.

(56) References cited:
- EP-A- 0 896 136
- EP-A- 0 990 788
- DE-A- 19 639 172
- PATENT ABSTRACTS OF JAPAN vol. 018, no. 579 (M-1698), 7 November 1994 (1994-11-07) -& JP 06 212961 A (TOYOTA MOTOR CORP), 2 August 1994 (1994-08-02)
- PATENT ABSTRACTS OF JAPAN vol. 018, no. 027 (M-1543), 17 January 1994 (1994-01-17) & JP 05 263624 A (MITSUBISHI MOTORS CORP), 12 October 1993 (1993-10-12)
- PATENT ABSTRACTS OF JAPAN vol. 1997, no. 02, 28 February 1997 (1997-02-28) & JP 08 260947 A (NISSAN DIESEL MOTOR CO LTD), 8 October 1996 (1996-10-08)

## Description

### BACKGROUND OF THE INVENTION

### 1. Field of the Invention

The invention relates to an emission control system of a lean-burn internal combustion engine, which includes a NOx catalyst that removes nitrogen oxides (NOx) from exhaust gases emitted from the lean-burn internal combustion engine capable of operating in a lean-burn mode.

### 2. Description of Related Art

NOx catalysts, such as selective-reduction type NOx catalysts and occlusion-reduction type NOx catalysts, are known as emission control devices for removing NOx, in particular, from exhaust gases emitted from internal combustion engines, such as diesel engines or lean-burn gasoline engines, which are capable of operating in a lean-burn mode.

The selective-reduction type NOx catalyst is able to reduce or decompose NOx in the presence of hydrocarbon (HC) under an excess-oxygen atmosphere. A suitable amount of HC component (which will be hereinafter referred to as "reducing agent" or "reductant") is needed for enabling the selective-reduction type NOx catalyst to reduce or decompose NOx. When the selective-reduction type NOx catalyst is used for exhaust purification of the above types of internal combustion engine, such as diesel engines, which emit exhaust gases containing an extremely small amount of HC during normal operations, there is a need to supply a reducing agent, such as light oil that also serves as fuel, to the selective-reduction type NOx catalyst, so as to enable the NOx catalyst to remove NOx during normal operations of the engine.

On the other hand, the occlusion-reduction type NOx catalyst is able to absorb NOx when the air-fuel ratio of exhaust gas that enters the NOx catalyst is lean, and release the absorbed NOx and reduce it into N₂ when the oxygen concentration of the entering exhaust gas is lowered.

When the occlusion-reduction type NOx catalyst is used for exhaust purification of the above types of internal combustion engines, NOx contained in exhaust gases is absorbed into the NOx catalyst during normal operations of the engine in which the air-fuel ratio of the exhaust gases is lean. If the exhaust gases having a lean air-fuel ratio are kept supplied to the NOx catalyst, however, the NOx absorbing capability of the NOx catalyst is saturated, and no further NOx can be absorbed into the NOx catalyst. As a result, NOx contained in the exhaust gases leaks or is released to the atmosphere.

In view of the above situation, the NOx absorbing capability of the occlusion-reduction type NOx catalyst needs to be recovered before it is saturated. To this end, the air-fuel ratio of exhaust gas that enters the NOx catalyst is controlled to be rich in certain timing, and the oxygen concentration of the exhaust gas is thus lowered, so that the NOx absorbed in the NOx catalyst is released and reduced into N₂. This operation to control the air-fuel ratio of the exhaust gas to be temporarily rich will be hereinafter called "rich spike" when appropriate.

In order to recover the NOx absorbing capability of the above type of NOx catalyst, the air-fuel ratio of the exhaust gas needs to be appropriately controlled to be rich. In conventional emission control systems, therefore, the amount of a reducing agent added to exhaust gas is calculated based on the engine speed, engine load, and other parameters, and the calculated amount of the reducing agent is added or supplied to the exhaust system when NOx releasing/reducing conditions are satisfied.

When the reducing agent is added to the exhaust gas in, for example, an exhaust port of the exhaust system of the engine, so as to suitably control the air-fuel ratio as measured at around the NOx catalyst and thereby release and reduce NOx, a response delay is observed in changes in the air-fuel ratio measured at the NOx catalyst since the catalyst is spaced some distance apart from the exhaust port. In addition, it is difficult to keep the air-fuel ratio at the NOx catalyst substantially equal to the target air-fuel ratio to be achieved by rich spikes, during the addition of the reducing agent.

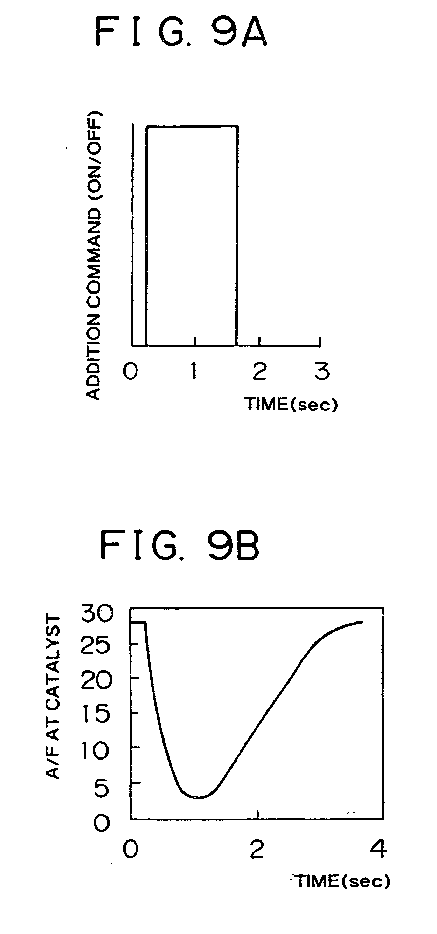

For example, a predetermined amount of reducing agent is injected into an exhaust port, or the like, for a predetermined period of time, according to a pattern as shown in Fig. 9A, in an attempt to control the air-fuel ratio detected at the NOx catalyst to be substantially equal to the target air-fuel ratio. The pattern of Fig. 9A indicates changes in a command signal (ON/OFF signal) applied to an injector for injecting the reducing agent, with time.

If the reducing agent is added according to the pattern of Fig. 9A, the air-fuel ratio measured at around the NOx catalyst changes as shown in Fig. 9B. As shown in Fig. 9B, the air-fuel ratio measured at the NOx catalyst falls far below the target air-fuel ratio that should be close to the stoichiometric value, and is kept in an unnecessarily rich state for a certain period of time. Namely, the air-fuel ratio of the exhaust gas is kept for a while in a low range that is richer than a level required for releasing and reducing NOx. This means that the amount of the reducing agent injected to the exhaust port is larger than an amount needed for removing NOx from the NOx catalyst, and therefore an increased amount of reducing agent passes through the NOx catalyst without being used for reducing NOx. In this case, an HC component contained in the reducing agent may pass through the NOx catalyst, and degrade exhaust emissions. In view of this possibility, an additional measure, such as an oxidizing catalyst disposed downstream of the NOx catalyst in the exhaust passage, needs to be taken for removing the HC component that has passed through the NOx catalyst.

From the prior art documents JP-A-06-212961 and EP-A-0 896 136 an emission control system and a method for purifying exhaust gas of an internal combustion engine are known intended for an internal combustion engine capable of operating in a lean-burn mode. This known system comprises a NOx catalyst disposed in an exhaust passage of the engine such that the NOx catalyst absorbs NOx contained in an exhaust gas wherein a reductant supply means is provided upstream of the NOx catalyst for adding a reducing agent to the exhaust gas to achieve a release and a reduction of Nox absorbed in the NOx catalyst. Furthermore, a load detecting means is provided for detecting a load of the internal combustion engine and a calculating means for calculating the amount of the reducing agent that is added in a NOx reducing process based on the load of an internal combustion engine. Moreover, control means are provided for controlling addition of the reducing agent by executing a plurality of reductant adding operations so as to provide the calculated amount of the reducing agent.

### SUMMARY OF THE INVENTION

The object underlying the invention is to provide an emission control system of an internal combustion engine and a method for purifying an exhaust gas emitted from an internal combustion engine which uses a NOx catalyst absorbing NOx contained in the exhaust gas and a reductant supply means adding a reducing agent to the exhaust gas to achieve a release and reduction of NOx absorbed in the NOx catalyst wherein a control of the air-fuel ratio measured around the NOx catalyst shall be sufficiently closed to a target air-fuel ratio set in the vicinity of the stoichiometric value when a reducing agent is added in the exhaust passage upstream of the NOx catalyst.

This object is solved by the features of claim 1 with respect to the emission control system and by the features of claim 11 with respect to the method for purifying the exhaust gas.

According to the invention, it is provided an emission control system of an internal combustion engine capable of operating in a lean-burn mode, including (a) a NOx catalyst disposed in an exhaust passage of the engine such that the NOx catalyst absorbs NOx contained in an exhaust gas, and (b) reductant supply means disposed upstream of the NOx catalyst, for adding a reducing agent to the exhaust gas so as to release and reduce NOx absorbed in the NOx catalyst. The emission control system further includes (1) load detecting means for detecting a load of the internal combustion engine; (2) calculating means for calculating an amount of the reducing agent that is added in one NOx reducing process, based on the load of the internal combustion engine; and (3) control means for controlling addition of the reducing agent by executing a plurality of reductant adding operations so as to provide the calculated amount of the reducing agent.

In the emission control system as described above, the amount of the reducing agent added for releasing and reducing NOx is controlled depending upon the load of the internal combustion engine. More specifically, the reductant addition amount is increased when the engine operates under a relatively low load, and the same amount is reduced as the engine load increases. In this manner, the reductant addition amount is suitably controlled, taking account of the likelihood of deposition of the reducing agent on walls of an exhaust passage that depend upon the flow velocity and temperature of exhaust gases, so that a sufficient amount of reducing agent can be constantly supplied to the NOx catalyst, irrespective of the engine operating conditions.

Then, the calculated amount of the reducing agent, which has been determined based on the engine load as described above, is added by executing a plurality of reductant adding operations, so that the air-fuel ratio measured at around the NOx catalyst fluctuates between the rich side and the lean side with respect to the stoichiometric value. Thus, the air-fuel ratio measured at the NOx catalyst is prevented from being kept in an excessively fuel-rich state for an extended period, and the average air-fuel ratio during the addition of the reducing agent is controlled to be sufficiently close to the stoichiometric value. In this manner, the amount of HC passing through the NOx catalyst is advantageously reduced, while at the same time the exhaust air-fuel ratio can be kept at stoichiometric or rich values for a prolonged period of time.

During multiple-time reductant addition in which the reducing agent is added a plurality of times in one process, the reductant addition amount in each of the second and subsequent reductant adding operations is made smaller than that in the first adding operation. By controlling addition of the reducing agent in this manner, otherwise possible accumulation of the reducing agent at the NOx catalyst due to repeated reductant addition can be prevented, and an excessive increase in the fuel-rich level of the exhaust gas can be also avoided.

In the above case, the reductant addition amount in each of the second and subsequent adding operations is made smaller than that in the first adding operation, by (1) controlling the period of addition of the reducing agent in each of the second and subsequent adding operations to be shorter than that in the first adding operation, or (2) controlling the pressure at which the reducing agent is added in each of the second and subsequent adding operations to be lower than that in the first adding operation. In a further embodiment of the invention, further the interval between the first and second reductant adding operations may be made smaller than that between the subsequent adding operations.

According to the invention, the above-indicated control means may control the second and subsequent reductant adding operations, based on a controlled variable that is corrected based on an air-fuel ratio measured at around the NOx catalyst after the first reductant adding operation is executed. With this control performed, the reducing agent can be added with improved accuracy, thus permitting highly efficient exhaust purification.

According to the invention, the control means may execute the plurality of reductant adding operations in accordance with a crank angle of the internal combustion engine, so that the reducing agent is added when an exhaust valve of the engine is opened. With this control, the reducing agent can be surely fed to the NOx catalyst along with a flow of the exhaust gas, thus enabling highly efficient addition of the reducing agent.

Preferably, the emission control system the invention further includes determining means for determining whether it is possible to add the reducing agent, depending upon an operating state of the vehicle. For example, it is determined whether the NOx catalyst is held at an activation temperature, or whether the internal combustion engine is in an operating region that permits addition of the reducing agent. Thus, the reducing agent is supplied when the engine or vehicle conditions allow releasing and reduction of NOx, so that the reducing is prevented from passing through the NOx catalyst without being used for reducing NOx.

Examples of the internal combustion engine capable of operating in a lean-burn mode, which employs the emission control system of the invention, include lean-burn gasoline engines of direct fuel injection type, and diesel engines.

The above-indicated load detecting means may detect the engine load, based on an output signal of an accelerator position sensor or a flow rate of intake air that is detected by an air flow meter.

The NOx catalyst used in the emission control system of the invention may be, for example, an occlusion-reduction type NOx catalyst or a selective-reduction type NOx catalyst.

The occlusion-reduction type NOx catalyst absorbs NOx when exhaust gas that enters the catalyst has a lean air-fuel ratio, and releases the absorbed NOx and reduces it into N₂ when the oxygen concentration of the exhaust gas is lowered. The occlusion-reduction type NOx catalyst includes (a) a support formed of, for example, alumina (Al₂O₃), (b) at least one element carried on the support and selected from alkali metals such as potassium (K), sodium (Na), lithium (Li) and cesium (Cs), alkali earth metals such as barium (Ba) and calcium (Ca), and rare earth metals such as lanthanum (La) and yttrium (Y), and (c) at least one noble metal such as platinum (Pt) also carried on the support.

Examples of the reducing agent used according to the invention may include light oil, gasoline, kerosene, and other substances, which contain hydrocarbon (HC).

### BRIEF DESCRIPTION OF THE DRAWINGS

Fig. 1 is a schematic view showing the construction of an internal combustion engine including an emission control system according to one embodiment of the invention;
Fig. 2A and Fig. 2B are views for explaining the NOx absorbing and releasing functions of an occlusion-reduction type NOx catalyst;
Fig. 3A is a graph showing a pattern of application of fuel addition (ON/OFF) commands according to which fuel is injected;
Fig. 3B is a graph showing changes in the air-fuel ratio measured at around the NOx catalyst with time during multiple-time fuel addition according to the pattern of Fig. 3A;
Fig. 4 is a view showing a fuel injection pattern of multiple-time fuel addition and changes in the air-fuel ratio;
Fig. 5A to Fig. 5D are views showing fuel injection patterns of multiple-time fuel addition;
Fig. 6 is a view showing another fuel injection pattern of multiple-time fuel addition;
Fig. 7 is a view showing a fuel injection pattern of multiple-time fuel addition in which the fuel injection quantity is reduced in the second and subsequent fuel injecting operations, and changes in the air-fuel ratio;
Fig. 8 is a flowchart showing a fuel addition routine executed to implement multiple-time fuel addition; and
Fig. 9A is a graph showing the timing of application of fuel addition (ON/OFF) commands according to which fuel is injected; and
Fig. 9B is a graph showing changes in the air-fuel ratio measured at around the NOx catalyst with time during the fuel injection according to the pattern of Fig. 9A.

### DETAILED DESCRIPTION OF PREFERRED EMBODIMENTS

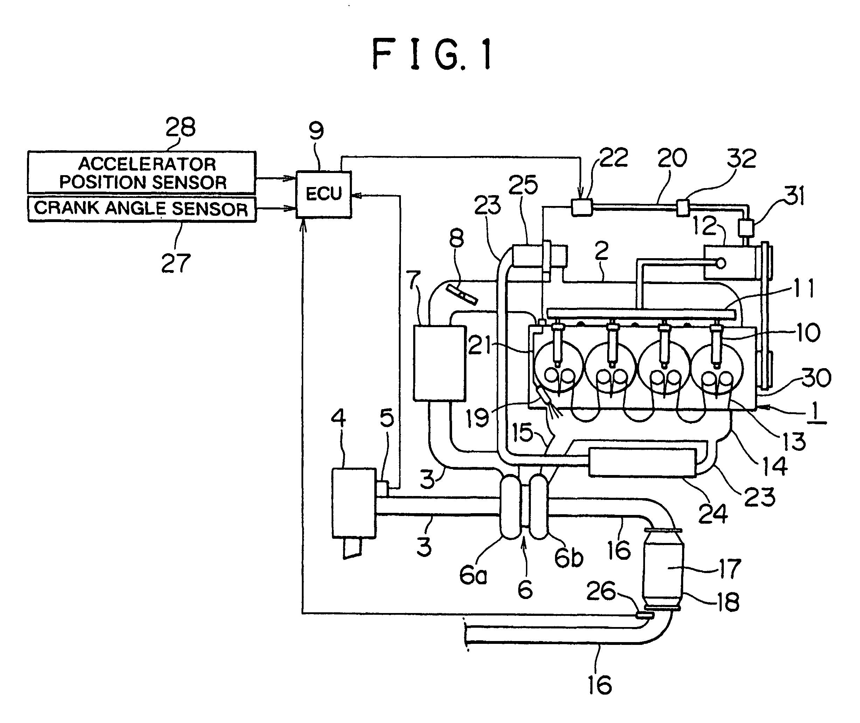

Referring to Fig. 1 through Fig. 6, an emission control system of an internal combustion engine according to a preferred embodiment of the invention will be described in detail. In the following embodiment, the invention is applied to an emission control system that is employed in a diesel engine adapted for driving a motor vehicle, such as an automobile.

Fig. 1 shows the construction of the internal combustion engine 1 in the form of a four-cylinder in-line diesel engine, which incorporates an emission control system according to the preferred embodiment of the invention. As shown in Fig. 1, intake air is drawn into a combustion chamber of each cylinder through an intake pipe 3 and an intake manifold 2. An air cleaner 4 is provided at one end of the intake pipe 3 at which the intake air is initially drawn into the pipe 3. An air flow meter 5, a compressor 6a of a turbocharger 6, an intercooler 7, and a throttle valve 8 are also provided between the opposite ends of the intake pipe 3.

The air flow meter 5 detects the quantity of new air that flows into the intake pipe 3 through the air cleaner 4, and generates an output signal indicative of the quantity of new air to an electronic control unit (ECU) 9 for controlling the engine 1. The ECU 9 then calculates the quantity of intake air, or the flow rate of intake air, based on the output signal of the air flow meter 5.

In the following description of this embodiment, the four cylinders of the engine 1 are numbered in the direction from the right to the left as viewed in Fig. 1, as first, second, third and fourth cylinders #1, #2, #3 and #4, respectively.

Each of the four cylinders of the engine 1 is provided with a fuel injection valve 10, which serves to inject a fuel (e.g., light oil) into a combustion chamber of the corresponding cylinder. Each of the fuel injection valves 10 is connected to a common rail 11 to which fuel is supplied from a fuel pump 12. The fuel pump 12 is driven by a crankshaft (not shown) of the engine 1. In operation, the torque generated by the crankshaft is transmitted to an input shaft of the fuel pump 12, and the fuel pump 12 delivers fuel at a pressure that depends upon the transmitted torque.

The fuel delivered from the fuel pump 12 is supplied via a fuel supply pipe to the common rail 11 at which the pressure of the fuel is raised to a certain level, and is then distributed to the fuel injection valves 10 of the respective cylinders. When drive current is applied to one of the fuel injection valves 10 thus supplied with the pressurized fuel, the fuel injection valve 10 is opened, to inject the fuel therefrom. The ECU 9 controls the valve opening timing and the valve opening period (or injection period) of each of the fuel injection valves 10 in accordance with operating conditions of the engine 1.

Exhaust gas produced in the combustion chamber of each cylinder of the engine 1 is discharged into an exhaust manifold 14, and is then emitted to the atmosphere via an exhaust collection pipe 15, an exhaust pipe 16, and a muffler (not illustrated in Fig. 1). A portion of the exhaust gas discharged into the exhaust manifold 14 may be recirculated into the intake manifold 2 through an exhaust recirculation pipe 23. An EGR cooler 24 and an EGR valve 25 are provided between the opposite ends of the exhaust recirculation pipe 23. The ECU 9 controls the opening amount of the EGR valve 25 in accordance with the operating conditions of the engine 1, so as to control the quantity of exhaust gas recirculated into the intake manifold 2.

A turbine 6b of the turbocharger 6 is provided at one end of the exhaust collection pipe 15 remote from the exhaust manifold 14, and a casing 18 that houses an occlusion-reduction type NOx catalyst 17 (or a lean NOx catalyst) is provided midway the exhaust pipe 16. Furthermore, an air-fuel ratio sensor 26 that generates an electric signal indicative of the air-fuel ratio of exhaust gas flowing through the exhaust pipe 16 is disposed downstream of the casing 18 in the exhaust pipe 16. The turbine 6b, which is driven by the exhaust gas, drives the compressor 6a coupled to the turbine 6b so as to elevate the pressure of the intake air.

Next, the occlusion-reduction type NOx catalyst 17 (which may be simply called "NOx catalyst") received in the casing 18 of the exhaust pipe 16 will be described in detail.

The occlusion-reduction type NOx catalyst 17 includes (a) a support (support) formed of, for example, alumina (Al₂O₃), (b) at least one element carried on the support and selected from alkali metals such as potassium (K), sodium (Na), lithium (Li) and cesium (Cs), alkali earth metals such as barium (Ba) and calcium (Ca), and rare earth metals such as lanthanum (La) and yttrium (Y), and (c) at least one noble metal such as platinum (Pt) also carried on the support.

The NOx catalyst 17 has the function of absorbing and releasing NOx. More specifically, the NOx catalyst 17 absorbs NOx when the air-fuel ratio (which will be called "exhaust air-fuel ratio) of exhaust gas to which the NOx catalyst 17 is exposed is on the lean side of the stoichiometric value, and releases the absorbed NOx in the form of NO₂ or NO when the exhaust air-fuel ratio becomes equal to or richer than the stoichiometric value and the oxygen concentration in the exhaust gas is lowered. The NOx (NO₂ or NO) released from the NOx catalyst 17 is immediately reduced into N₂ by reaction with unburned hydrocarbon (HC) and/or carbon monoxide (CO) contained in the exhaust gas. It is thus possible to remove HC, CO and NOx from the exhaust gas by appropriately controlling the exhaust air-fuel ratio.

In this specification, the exhaust air-fuel ratio means the ratio of the total amount of air supplied to the engine 1 to the total amount of fuel (hydrocarbon) supplied to the engine 1. The total amount of air or fuel includes those amounts of air or fuel that is supplied to an exhaust passage upstream of the NOx catalyst, engine combustion chambers, an intake passage, and other parts of the engine 1. When none of the fuel (or reducing agent) and air is supplied to the exhaust passage upstream of the NOx catalyst, the exhaust air-fuel ratio is equal to the air-fuel ratio of an air-fuel mixture that is supplied to the engine combustion chambers.

In diesel engines, an air-fuel mixture that is normally burned in the combustion chambers is considerably fuel-lean, that is, the air-fuel ratio of the air-fuel mixture to be burned is considerably greater than the stoichiometric value (which is between 14 and 15). When the diesel engine is in a normal operating state, therefore, the air-fuel ratio of exhaust gas that enters the NOx catalyst is considerably lean. In this normal operating state, therefore, NOx contained in the exhaust gas is likely to be absorbed in the NOx catalyst, while only an extremely small amount of NOx is released from the NOx catalyst.

In gasoline engines, the air-fuel ratio of an air-fuel mixture supplied to the combustion chambers may be controlled to be stoichiometric or rich, so that the resulting exhaust gas has a stoichiometric or rich air-fuel ratio. In this manner, the oxygen concentration in the exhaust gas is lowered, so that the NOx absorbed in the NOx catalyst can be released from the catalyst. In the case of diesel engines, however, it is undesirable or impracticable to control the air-fuel ratio of an air-fuel mixture supplied to the combustion chambers to be stoichiometric or rich, because soot is produced upon combustion of such an air-fuel mixture.

In the diesel engine, therefore, a reducing agent needs to be supplied to the exhaust gas so as to lower the oxygen concentration of the exhaust gas, in suitable timing before the NOx absorbing capability of the NOx catalyst gets saturated, so that the NOx absorbed in the NOx catalyst is released and reduced. Generally, light oil, which is used as a fuel of diesel engines, may be used as the reducing agent.

In view of the above situation, the ECU 9 of the emission control system of this embodiment estimates the amount of NOx absorbed in the NOx catalyst, based on the past operating state of the engine 1, and causes a flow control valve 22 to open for a certain period of time so as to inject a certain amount of fuel through a fuel injection nozzle 19 when the estimated NOx amount reaches a predetermined value. As a result, the oxygen concentration in the exhaust gas that enters the NOx catalyst is lowered, and the NOx absorbed in the NOx catalyst is released and reduced into N₂.

More specifically, the internal combustion engine 1 of this embodiment is provided with a reductant supply device that functions to add fuel (e.g., light oil) serving as a reducing agent, to exhaust gas that flows through the exhaust passage located upstream of the NOx catalyst 17. In the present embodiment, the reductant supply device includes the fuel pump 12 and the fuel injection nozzle 19 as mentioned above, a fuel pipe 20, a fuel passage 21, the above-mentioned flow control valve 22, and other components. The fuel injection nozzle 19, which serve as a supply port of the reductant supply device, is mounted on a cylinder head 30 of the engine 1, such that the nozzle 19 is exposed to an exhaust port 13 of the first cylinder #1. In operation, fuel that is pumped from the fuel pump 12 can be supplied to the fuel injection nozzle 19, via the fuel pipe 20 and the fuel passage 21 formed in the cylinder head 30. The flow control valve 22 provided midway the fuel pipe 20 serves to control the flow rate or quantity of fuel flowing through the fuel pipe 20, thereby to control the amount of the reducing agent added to the exhaust gas.

A portion of the fuel pipe 20 that is located upstream of the flow control valve 22 is provided with a shutoff valve 31 for shutting off or cutting flow of fuel through the pipe 20, and a reductant pressure sensor 32 that outputs an electric signal indicative of the pressure within the fuel pipe 20. The reductant pressure sensor 32 is disposed between the flow control valve 22 and the shutoff valve 31.

The fuel injection nozzle 19 is mounted on the cylinder head 30 such that fuel is injected from the nozzle 19 toward the exhaust collection pipe 15. When the flow control valve 22 is opened, a high-pressure fuel delivered from the fuel pump 12 is fed to the fuel injection nozzle 19 through the fuel pipe 20. The pressure of the fuel is applied to the fuel injection nozzle 19, and the fuel injection nozzle 19 opens when the fuel pressure reaches a certain valve-opening level, so that the reducing agent is injected through the fuel injection nozzle 19.

When the flow control valve 22 is closed, and supply of the fuel from the fuel pump 12 is stopped, on the other hand, the fuel pressure that has acted on the fuel injection nozzle 19 is reduced to be smaller than the above-indicated valve-opening level. As a result, the fuel injection nozzle 19 is closed, and fuel injection is stopped.

The ECU 9 controls opening and closing of the flow control valve 22, and also controls the opening amount of the flow control valve 22. The pressure of the fuel fed to the fuel injection nozzle 19 is raised with an increase in the opening amount of the valve 22, and is lowered with a reduction in the opening amount of the valve 22.

The exhaust recirculation pipe 23 (which will be abbreviated to "EGR pipe") through which a portion of the exhaust gas is returned to the intake system is connected at one end thereof to a portion of the exhaust manifold 14 that faces the fourth cylinder #4. The other end of the EGR pipe 23 is connected to the intake manifold 2. The EGR cooler 24 and the EGR valve 25 are provided between the opposite ends of the EGR pipe 23, as described above. The ECU 9 controls the opening amount of the EGR valve 25 in accordance with the operating state of the engine 1, so as to control the amount of exhaust gas recirculated. In this embodiment, the EGR pipe 23, EGR cooler 24 and the EGR valve 25 constitute an exhaust gas recirculation (EGR) system.

Since the fuel injection nozzle 19 injects fuel toward the exhaust collection pipe 15 as described above, the fuel added to the exhaust gas smoothly flows into the exhaust collection pipe 15. Furthermore, the fuel injection valve 19 is mounted at the exhaust port 13 of the first cylinder #1, while the EGR pipe 23 is connected to the exhaust manifold 14 at a location in the vicinity of the fourth cylinder #4. This arrangement reduces or eliminates a possibility that the fuel supplied from the fuel injection nozzle 19 is introduced into the EGR pipe 23.

The ECU 9 has a digital computer including a read-only memory (ROM), a random access memory (ROM), a central processing unit (CPU), an input port and an output port, which are interconnected via a bidirectional bus. The ECU 9 performs basic engine control operations, such as an operation to control the amount of fuel injected into the engine 1.

To perform the engine control operations, the ECU 9 receives, at the input port, an input signal from an accelerator position sensor 28 and an input signal from a crank angle sensor 27. The accelerator position sensor 28 generates an output voltage that is proportional to the accelerator position (i.e., the amount of depression of the accelerator pedal) to the ECU 9, which in turn calculates the engine load based on the output signal of the accelerator position sensor 28. The crank angle sensor 27 generates an output pulse to the ECU 9 each time the crankshaft rotates a predetermined angle, and the ECU 9 calculates the engine speed based on the output pulses. The ECU 9 determines the current engine operating state based on the engine load and the engine speed, and calculates a fuel injection amount that is suitable for the current engine operating state, referring to an injection amount map (not shown). The ECU 9 then calculates a valve-opening period of the fuel injection valve 10 that corresponds to the fuel injection amount thus calculated, and controls the operation of the fuel injection valve 10 based on the valve-opening period thus determined.

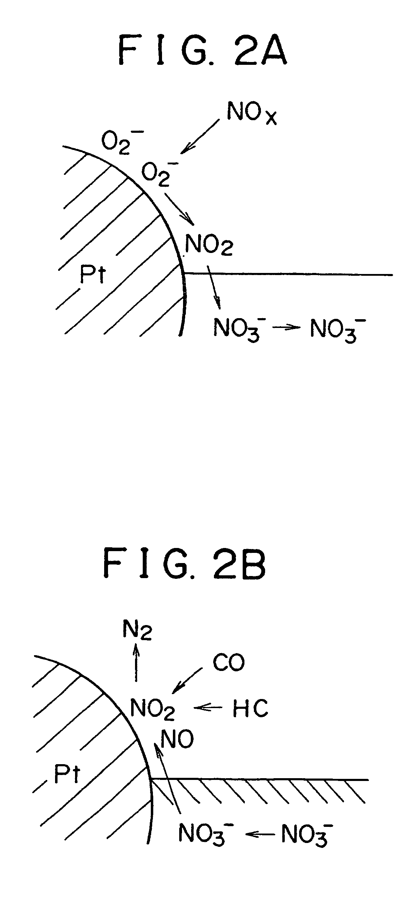

In the internal combustion engine 1, the NOx catalyst 17 is disposed in the exhaust passage 16, as described above, and a NOx absorbent carried on the NOx catalyst 17 has the function of absorbing and releasing NOx. The mechanism of absorption and reduction of NOx is illustrated in Fig. 2A and Fig. 2B by way of example. While Fig. 2A and Fig. 2B show an example in which platinum Pt and barium Ba are carried on the support of the NOx catalyst 17, similar mechanisms may be provided when other noble metals, alkali metals, alkali earth metals or rare earth metals are used. The mechanism of Fig. 2A and Fig. 2B will be briefly described.

When the exhaust gas emitted from the combustion chambers of the engine 1 continues to be fuel-lean, the oxygen concentration of the exhaust gas that enters the NOx catalyst 17 increases, and the oxygen O₂ thus increased is deposited in the form of O₂⁻ or O²⁻ on the surface of platinum Pt, as shown in Fig. 2A. Then, O₂⁻ or O²⁻ reacts with NO contained in the exhaust gas to form NO₂ (as represented by: 2NO + O₂ → 2NO₂). A portion of the NO₂ thus produced is further oxidized on platinum Pt, and is absorbed into the NOx absorbent to combine with barium oxide BaO. As a result, nitrate ions NO₃⁻ are diffused in the NOx absorbent, as shown in Fig. 2A. In this manner, NOx is absorbed in the NOx absorbent.

While the exhaust gas entering the NOx catalyst 17 has a high oxygen concentration, NO₂ is produced on the surface of platinum Pt, and the NO₂ is kept absorbed into the NOx absorbent to form nitrate ions NO₃⁻ until the NOx absorbing capability of the NOx absorbent is saturated.

If the oxygen concentration of the exhaust gas is lowered and the amount of NO₂ produced on the surface of Pt is reduced, on the other hand, reverse reactions, i.e., NO₃⁻ → NO₂, take place, and the NO₂ formed from the nitrate ions NO₃⁻ are released from the NOx absorbent. Namely, when the exhaust gas that enters the NOx catalyst 17 is less fuel-lean, with the oxygen concentration of the exhaust gas being reduced, NOx is released from the NOx absorbent of the NOx catalyst 17.

When the air-fuel ratio of the exhaust gas is made fuel-rich, on the other hand, HC and CO react with oxygen O₂⁻ or O²⁻ on platinum Pt, and are oxidized. Since the oxygen concentration of the exhaust gas is considerably reduced when the air-fuel ratio of the exhaust gas is rich, NO₂ is released from the NOx absorbent, and the NO₂ thus released is reduced by reaction with unburned HC and CO, as illustrated in Fig. 2B, and removed in the form of N₂. If no further NO₂ exists on the surface of platinum Pt, more NO₂ is successively released from the NOx absorbent.

When the air-fuel ratio of the exhaust gas is made rich, therefore, NOx is released from the NOx absorbent in a relatively short time, and reduced and removed in the form of N₂.

In this embodiment in which the diesel engine 1 is employed, the air-fuel ratio of exhaust gas produced during normal operations of the engine 1 is fuel-lean, and therefore the NOx absorbent absorbs NOx in the exhaust gas in the normal operating state of the engine 1. If the reducing agent is supplied to the exhaust port located upstream of the NOx catalyst 17, the air-fuel ratio of the exhaust gas that passes through the NOx catalyst 17 turns to be rich, and NOx is released from the NOx absorbent of the catalyst 17 and reduced.

In this embodiment, light oil used as a fuel of the engine 1 is also used as the reducing agent for reducing NOx. The use of the light oil is advantageous in view of the storage, replenishment or resupply, and other factors.

In general, the reducing agent (e.g.; fuel in this embodiment) is supplied under various conditions, which include, for example, the pressure under which the reducing agent is supplied or injected, and the period and interval of supply of the reducing agent. In this embodiment, fuel serving as a reducing agent, which is used in one process of releasing and reducing NOx, is added to the exhaust gas a plurality of times, rather than at a time. In other words, the addition of the fuel is carried out on two or more occasions during one NOx releasing and reducing process, so as to achieve efficient releasing and reduction of NOx. This manner of adding the fuel as a reducing agent will be called "multiple-time addition" of the fuel or reductant, when appropriate.

When the fuel is supplied from the fuel injection nozzle 19 to the exhaust gas in the exhaust port 13, the amount of the fuel supplied and the implementation of the multiple-time addition of the fuel are controlled in the manners as described below, based on a load condition of the engine 1.

### First Example

In a first example of a control operation performed by the emission control system of this embodiment, the ECU 9 initially reads operating conditions of the engine 1. More specifically, the ECU 9 calculates the engine load based on the output signal of the accelerator position sensor 28, and calculates the engine speed based on the output pulses of the crank angle sensor 27. The ECU 9 then determines the engine operating state based on the engine load and the engine speed, and calculates a fuel injection amount that is suitable for the engine operating state, with reference to an injection amount map (not shown).

Subsequently, the ECU 9 estimates the amount of NOx absorbed in the NOx catalyst, from the past operating state of the engine 1 or the history of the operating state of the engine 1, and causes a fuel as a reducing agent to be injected from the fuel injection nozzle 19 into the exhaust gas when the estimated NOx amount reaches a predetermined value. To permit injection of the fuel, the flow control valve 22 is opened so that a portion of the fuel delivered from the fuel pump 12 is supplied to the fuel injection nozzle 19 through the fuel pipe 20.

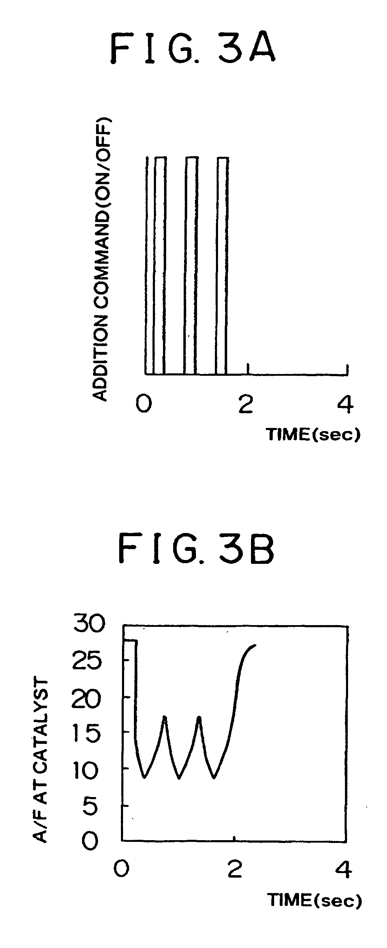

The injection of the fuel in one NOx releasing and reducing process as described above is accomplished by performing a plurality of fuel injecting operations in each of which the fuel is injected by a predetermined amount. To enable the multiple-time fuel addition, the ECU 9 controls the flow control valve 22 to open and close intermittently, so that the fuel is injected from the fuel injection nozzle 19 at predetermined time intervals. More specifically, the ECU 9 generates addition commands (or ON/OFF signals) three times as shown in Fig. 3A, so as to open and close the flow control valve 22 in accordance with the commands. Thus, the fuel injection is carried out at the predetermined intervals such that each fuel injection lasts for a predetermined period of time.

During the multiple-time fuel addition as described above, the air-fuel ratio of the exhaust gas as measured at the NOx catalyst 17, which is generated by the air-fuel sensor 26, goes up and down with respect to a target air-fuel ratio that is close to the stoichiometric value, as shown in Fig. 3B. Even with such fluctuations of the exhaust air-fuel ratio, the average of the air-fuel ratio during the multiple-time fuel addition can be made substantially equal to the target air-fuel ratio.

Thus, the air-fuel ratio measured at around the NOx catalyst can be mimetically made equal to the target air-fuel ratio, and ineffective addition of fuel can be suppressed or avoided, resulting in a reduced amount of HC passing through the NOx catalyst 17. Furthermore, the air-fuel ratio at the NOx catalyst can be kept close to the stoichiometric value for an extended period of time, so that NOx can be removed with improved efficiency.

### Second Example

In a second example of a control operation performed by the emission control system of this embodiment, the fuel injection is performed a plurality of times, such that the amount of the fuel added in the second and subsequent fuel injecting operations is smaller than that added in the first fuel injecting operation.

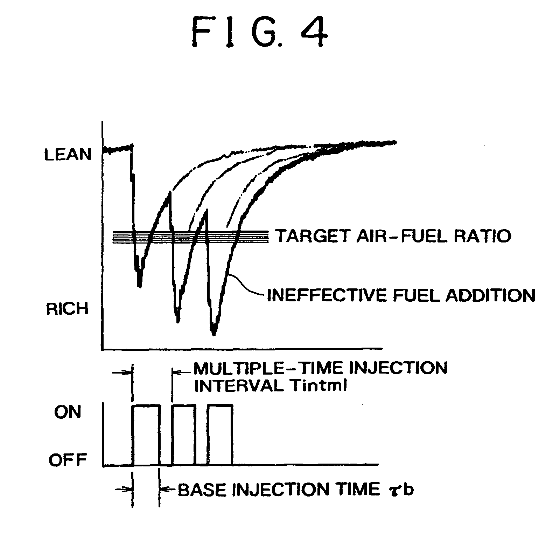

In the first example as described above, substantially the same amount of the fuel is added in the three injecting operations during the multiple-time fuel injection. If the air-fuel ratio is made rich by the initial fuel injection, and the next fuel injection is then executed before the air-fuel ratio returns completely to the original lean value, as illustrated in Fig. 4 by way of example, the resulting air-fuel ratio becomes excessively rich since fuel-rich exhaust gases are successively fed to the NOx catalyst 17. In this case, the amount of the fuel which is not effective to reduce NOx is increased, and HC contained in the fuel may pass through the NOx catalyst 17 without being consumed at the NOx catalyst 17.

In view of the above situation, the amount of the fuel injected from the fuel injection nozzle 19 in each of the second and subsequent injecting operations is controlled to be smaller than that injected in the first injecting operation. To this end, the ECU 9 may control the flow control valve 22, for example, so as to inject the fuel for a relatively long period of time in the first injecting operation, and reduce the fuel injection period for the second and subsequent injecting operations.

Other means or methods may be employed for controlling the amount of the fuel injected in the second and following injecting operations to be smaller than that injected in the first injecting operation. For example, the fuel is injected at a relatively high pressure in the initial injecting operation, and the pressure at which the fuel is injected is lowered for the second and subsequent injecting operations. In another method, the interval between the first and second injecting operations is made shorter than that between the injecting operations following the first injecting operation.

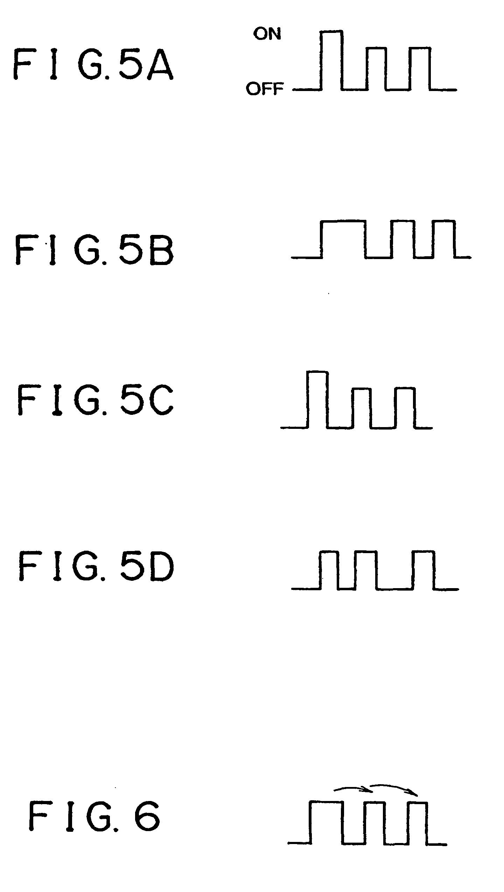

Fig. 5A through Fig. 5D indicate various patterns of addition of the fuel. The ECU 9 controls the flow control valve 22 in accordance with a fuel addition pattern selected from the patterns of Fig. 5A to Fig. 5D that are stored in advance in the ROM.

In the pattern as shown in Fig. 5A, a relatively large amount of the fuel is added in the first injecting operation, and the amount of the fuel added is reduced for the second and subsequent injecting operations.

To realize the fuel addition pattern of Fig. 5A, the size of a nozzle hole of the fuel injection nozzle 19, which is made variable, is controlled to be relatively large during the first injecting operation, and the size of the nozzle hole is reduced for the second and subsequent injecting operations.

In the pattern as shown in Fig. 5B, the fuel is injected for a relatively long period of time in the first injecting operation, and the period of injection of the fuel (which may also called "fuel injection time") is reduced for the second and subsequent injecting operations. With the fuel injection time thus changed, the initial interval between the first and second injecting operations is relatively large, and the interval between two successive injecting operations following the first injecting operation is reduced as compared with the initial interval. Here, the interval between two successive injecting operations is defined as a period of time between the start of injection of the fuel in one fuel injecting operation and the start of injection of the fuel in the next injecting operation that occurs right after the above-indicated one injecting operation.

To realize the fuel addition pattern of Fig. 5B, the flow control valve 22 is opened for a relatively long period of time in the first fuel injecting operation, and the valve-opening period of the flow control valve 22 is reduced for the second and subsequent injecting operations.

In the pattern as shown in Fig. 5C, the fuel is injected at a relatively high pressure in the first injecting operation, and the pressure at which the fuel is injected is lowered for the second and subsequent injecting operations. In this case, the interval between two successive injecting operations is constant. If the pressure at which the fuel is injected is increased, an increased amount of fuel is injected from the fuel injection nozzle 19. Thus, within the same period of injection of the fuel, the amount of the fuel injected increases with an increase in the fuel injection pressure.

To realize the fuel addition pattern of Fig. 5C, the flow control valve 22 is fully opened during the first fuel injecting operation, so that the pressure in the fuel passage 21 is kept high, and the opening amount of the flow control valve 22 is reduced in the second and subsequent injecting operations, so that the fuel injection pressure at the fuel injection nozzle 19 is lowered.

In the pattern as shown in Fig. 5D, the interval between the first and second fuel injecting operations is made shorter than that between the second and third injecting operations.

To realize the fuel addition pattern of Fig. 5D, the flow control valve 22 is opened in the second injecting operation upon a lapse of a relatively short time after the flow control valve 22 is closed at the end of the first injecting operation. Subsequently, the flow control valve 22 is closed for a relatively long time between two successive injecting operations.

The patterns of Figs. 5A, 5B, 5C and Fig. 5D are stored in the ROM of the ECU 9, and the control operations according to these patterns may be performed as needed, depending upon the engine operating conditions, such as the engine load. If possible, two or more of these control operations may be carried out in combination. For example, the fuel is injected at a relatively high pressure for a relatively long period of time in the first injecting operation, and the fuel injection pressure is lowered and the fuel injection time is shortened for the second and subsequent injecting operations.

By varying the manner of adding the fuel as a reducing agent in the second and subsequent injecting operations from that in the first injecting operation, according to a selected one or more of the patterns of Fig. 5A to Fig. 5B, the air-fuel ratio measured at the NOx catalyst 17 can be controlled to be mimetically close to the target air-fuel ratio, which leads to a reduction in the amount of fuel that is not effective to reduce NOx absorbed in the NOx absorbent.

### Third Example

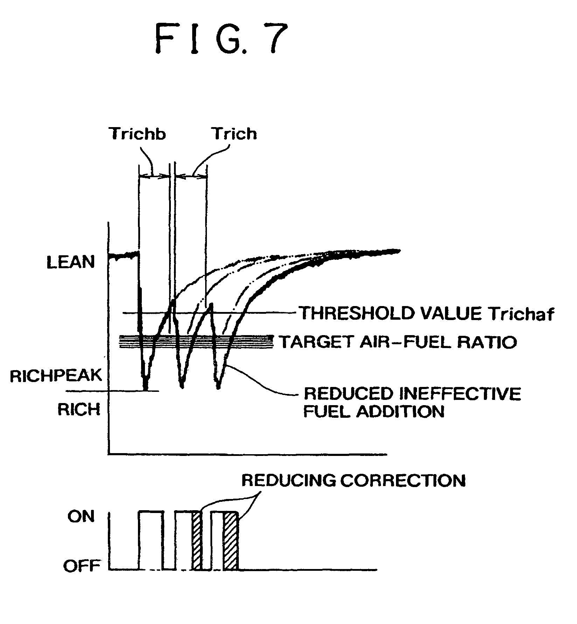

In a third example of a control operation performed by the emission control system of this embodiment, in which multiple-time fuel addition is performed, fuel addition control is executed after the first injecting operation. Namely, the fuel injection amount, fuel injection time, injection interval, or the like, associated with the second and subsequent injecting operations is corrected based on an engine operating state (such as A/F ratio) detected after the first injecting operation, as schematically shown in Fig. 6. For example, the amount of the fuel injected in the second and subsequent fuel injecting operations is controlled to a value that is corrected based on the air-fuel ratio that is generated from the air-fuel ratio sensor 26 located downstream of the NOx catalyst 17 after the first injecting operation, as shown in Fig. 7.

In the control operation as described above, the ECU 9 initially calculates the amount of addition of the fuel required for making the air-fuel ratio at the NOx catalyst 17 substantially equal to the target air-fuel ratio, based on the engine speed Ne and the fuel injection amount Qfin. When the calculated amount of fuel is added by executing a plurality of fuel injecting operations, in other words, when multiple-time fuel addition is carried out to accomplish the addition of the calculated amount of the fuel, the base fuel injection time τb of the first injecting operation is determined based on the engine speed Ne and the fuel injection amount Qfin, and the interval Tintml between two successive injecting operations in the multiple-time addition is determined in accordance with the target air-fuel ratio, based on the base fuel injection time τb. Also, the base rich time Trichb corresponding to the base injection time τb is calculated. In addition, the set number of the fuel injecting operations to be executed in the multiple-time addition is determined so that the total amount of fuel injected during the multiple-time fuel addition becomes equal to a predetermined value (i.e., the calculated amount of fuel as indicated above).

Here, the base fuel injection time τb is defined as a basic period of time in which the fuel injection nozzle 19 is held opened and the fuel is injected from the nozzle 19. The interval Tintml of the multiple-time fuel addition is defined as a time interval between the start of one fuel injecting operation and the start of the next fuel injecting operation. The base rich time Trichb is defined as a period of time during which the air-fuel ratio is in a richer region with respect to a threshold value Trichaf (namely, the air-fuel ratio is richer than the threshold value Trichaf) as a result of a single fuel injecting operation.

Subsequently, the ECU 9 executes the first injecting operation by opening the flow control valve 22, and compares the air-fuel ratio generated from the air-fuel sensor 26 after the fuel injection, with the threshold value Trichaf. Here, the threshold value Trichaf, which is higher (i.e., leaner) than the target air-fuel ratio close to the stoichiometric value, is defined as a boundary value of the air-fuel ratio that is at least required for the NOx catalyst 17 to release and reduce NOx by rich spikes. When the air-fuel ratio generated from the air-fuel ratio sensor 26 is leaner than the threshold value, the ECU 9 increases the rich time Trich in the next injecting operation so that the resulting air-fuel ratio becomes richer than the threshold value Trichaf.

Subsequently, the ECU 9 executes the next fuel injecting operation, and compares the air-fuel ratio generated by the air-fuel ratio sensor 26 with the threshold value Trichaf again. If the output of the air-fuel ratio sensor 26 is richer than the threshold value Trichaf, the rich time Trich of the second and subsequent fuel injecting operations is compared with the base rich time Trichb of the first injecting operation, and the base fuel injection time τb is corrected depending upon the result of the comparison. If the comparison between the base rich time Trichb and the rich time Trich indicates that the rich time Trich is equal to or greater than the base rich time Trichb, the base fuel injection time τb for the following injecting operations is reduced. If the rich time Trich is less than the base rich time Trichb, on the other hand, the base injection time τb for the following injecting operations is increased. With this correction, the ECU 9 resets the rich time Trich. If all of the fuel injecting operations in the multiple-time fuel addition have not yet been finished, the next fuel injection is performed based on the reset rich time Trich.

When the base fuel injection time τb is corrected to be reduced as shown in Fig. 7, the rich time Trich in the second and subsequent injecting operations is accordingly reduced to a certain length, and the richest air-fuel ratio (Richpeak in Fig. 7) that can be achieved during each fuel injection is kept at substantially the same level. If the above correction is not made, the richest air-fuel ratio (Richpeak) continues to be richer for each fuel injecting operation as shown in Fig. 4, which means an excessively large amount of fuel added to the exhaust gas.

The richest values (Richpeak) of the air-fuel ratio as indicated in Fig. 7 may be used for the correction of the base fuel injection time τb. In this case, the rich peak value of the air-fuel ratio is integrated upon each fuel injecting operation, and, when the integrated value exceeds a predetermined value, the base injection time τb is corrected to be reduced, depending upon the degree by which the integrated value exceeds the predetermined value.

Similarly, a value obtained by subtracting the threshold value Trichaf from the output of the air-fuel ratio sensor 26 may be used for the correction of the base injection time τb. In this case, the above-indicated value is integrated upon each fuel injecting operation, and, when the integrated value exceeds a predetermined value, the base fuel injection time τb is corrected to be reduced, depending upon the degree by which the integrated value exceeds the predetermined value.

On the other hand, the air-fuel ratio is changed or shifted to the lean side during a period between one fuel injecting operation and the next fuel injecting operation, in which no fuel is added to the exhaust gas. As shown in Fig. 7, the most fuel-lean value of the air-fuel ratio that can be achieved during this period is kept substantially constant with respect to the multiple fuel injecting operations. With the multiple-time addition thus performed, the air-fuel ratio fluctuates between the lean side and the rich side of the target air-fuel ratio, such that the average air-fuel ratio is made substantially close to the target air-fuel ratio.

Accordingly, the fuel as a reducing agent is prevented from passing through the NOx catalyst 17. Furthermore, the multiple-time fuel injection can be carried out with improved accuracy, due to feedback control performed based on the actual air-fuel ratio generated from the air-fuel ratio sensor 26 after fuel injection, thus assuring highly efficient removal of NOx.

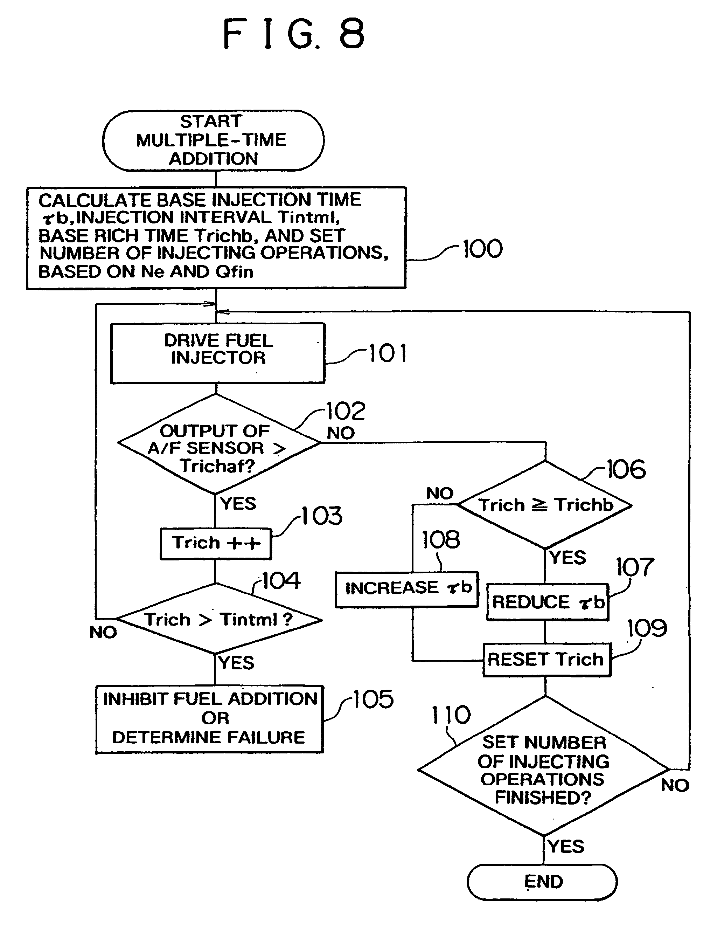

The fuel addition control as described is executed according to a fuel addition routine as illustrated in Fig. 8. This control routine is stored in advance in the ROM of the ECU 9, and is repeatedly executed by the CPU. The fuel addition control will be now described with reference to the routine of Fig. 8.

Step 100 is initially executed to determine the base fuel injection time τb of the first injecting operation and the multiple-time injection interval Tintml, based on the engine speed Ne and the fuel injection amount Qfin. Also determined in step 100 are the base rich time Trichb corresponding to the base injection time τb, and the set number of fuel injecting operations required for making the total amount of the added fuel substantially equal to a predetermined amount.

The control process then proceeds to step 101 in which the first injecting operation is performed in which the fuel serving as a reducing agent is injected from the fuel injection nozzle 19 under the above-described conditions.

Subsequently, step 102 is executed to compare the output value of the air-fuel ratio sensor 26 after the fuel injection with the threshold value Trichaf. If the air-fuel ratio generated from the air-fuel ratio sensor 26 is leaner than the threshold value Trichaf, the control process proceeds to step 103.

In step 103, the rich time Trich for the second and subsequent injecting operations is increased so that the air-fuel ratio becomes richer than the threshold value Trichaf.

Step 104 is then executed to determine whether the rich time Trich is greater than the multiple-time injection interval Tintml. If the rich time Trich is greater than the multiple-time injection interval Tintml, the control process proceeds to step 105 in which further fuel addition is inhibited assuming that the exhaust gas will be in an excessively rich state, or the fuel injector, calculating means, or the like, is determined as being at fault.

If it is determined in step 104 that the rich time Trich is shorter than the multiple-time injection interval Tintml, the next fuel injecting operation is carried out, and then the air-fuel ratio received from the air-fuel ratio sensor 26 is compared with the threshold value Trichaf. If the output of the air-fuel ratio sensor 26 is richer than the threshold value Trichaf, the control process proceeds to step 106 in which the rich time Trich of the subsequent injecting operations is compared with the base rich time Trichab (i.e., the rich time Trich in the last cycle) of the first injecting operation. If the rich time Trich is less than the base rich time Trichb, the control process proceeds to step 108 in which the base fuel injection time τb is corrected to be reduced, and step 109 is then executed to reset the rich time Trich. If the rich time Trich is equal to or greater than the base rich time Trichb, on the other hand, the base injection time τb is corrected to be increased, and step 109 is then executed to reset the rich time Trich.

In the next step 110, it is determined whether the set number of fuel injecting operations have been carried out. If a negative decision (NO) is obtained in step 110, the control process returns to step 101 in which the fuel is injected from the fuel injection nozzle 19.

If the set number of fuel injecting operations have been finished, the control routine is terminated.

In the third example as described above, the amount of the fuel added in the second and subsequent injecting operations is corrected based on the air-fuel ratio outputted from the air-fuel ratio sensor 27 located downstream of the NOx catalyst 17 after the first injecting operation, thus assuring improved accuracy in the addition of the fuel to the exhaust gas.

### Other Embodiments

While the invention is applied to a diesel engine in the illustrated embodiment, the invention is equally applicable to gasoline engines capable of operating in a lean-burn mode.

In another embodiment of the invention, the ECU 9 controls the timing of fuel injection from the fuel injection nozzle 19, to be in synchronism with the timing of opening of exhaust valves (not shown) through which exhaust gas is emitted from the respective cylinders into the exhaust manifold 14, in accordance with rotation of the engine 1 as represented by the signal from the crank angle sensor 27. With this control, the fuel injected from the fuel injection nozzle 19 can flow along with the exhaust gas emitted from the cylinders, through the exhaust collection pipe 15 and the exhaust pipe 16. Thus, the added fuel is less likely to be deposited on the walls of the exhaust collection pipe 15 and the exhaust pipe 16. Consequently, the added fuel reaches the NOx catalyst 17 without fail, and effectively reduces and releases NOx absorbed in the NOx absorbent of the catalyst 17.

## Claims

1. An emission control system of an internal combustion engine (1) capable of operating in a lean-burn mode, including (a) a NOx absorbing catalyst (17) disposed in an exhaust passage (16) of the internal combustion engine (1) such that the NOx absorbing catalyst (17) absorbs NOx contained in an exhaust gas, and (b) reductant supply means (12, 19, 20, 21, 22) disposed upstream of the NOx absorbing catalyst (17), for adding a reducing agent to the exhaust gas so as to release and reduce NOx absorbed in the NOx absorbing catalyst (17), further comprising:
load detecting means (5, 28) for detecting a load of the internal combustion engine;
calculating means for calculating an amount of the reducing agent that is added in one NOx releasing and reducing process, based on the load of the internal combustion engine (1); and
control means for controlling addition of the reducing agent by executing a plurality of reductant adding operations so as to provide the calculated amount of the reducing agent;
**characterized in that**
the control means controls an amount of the reducing agent added in each of the plurality of reductant adding operations such that the amount of the reducing agent added in each of second and subsequent reductant adding operations is made smaller than that of the reducing agent added in a first reductant adding operation.

2. An emission control system according to claim 1, further comprising means for determining whether it is possible to add the reducing agent, depending upon an operating state of a vehicle having the internal combustion engine (1).

3. An emission control system according to any one of claims 1 or 2, wherein the control means controls a period of time during which the reducing agent is added in each of the plurality of reductant adding operations such that the period of addition of the reducing agent in a first reductant adding operation is made longer than that of the reducing agent in each of second and subsequent reductant adding operations. ,

4. An emission control system according to any one of claims 1 to 3, wherein the control means controls a pressure at which the reducing agent is added in each of the plurality of reductant adding operations such that the pressure at which the reducing agent is added in a first reductant adding operation is made higher than that at which the reducing agent is added in each of second and subsequent reductant adding operations.

5. An emission control system according to any one of claims 1 to 4, wherein the control means controls an interval between two successive ones of the plurality of reductant adding operations such that the interval between first and second reductant adding operation is made shorter than that between subsequent reductant adding operations.

6. An emission control system according to any one of claims 1 to 5, wherein the control means controls second and subsequent ones of the plurality of reductant adding operations, based on a controlled variable that is corrected based on an air-fuel ratio measured at around the NOx catalyst (17) after a first reductant adding operation is executed.

7. An emission control system according to any one of claims 1 to 6, wherein the controlled variable is a period of time during which the reducing agent is added in each of the plurality of reductant adding operations.

8. An emission control system according to claim 1 or 2, wherein the plurality of reductant adding operations are executed at predetermined time intervals such that a predetermined amount of the reducing agent is added for a predetermined period of time in each of the reductant adding operations. ,

9. An emission control system according to any one of claims 1 to 8, wherein the control means executes the plurality of reductant adding operations in accordance with a crank angle of the internal combustion engine (1) so that the reducing agent is added when an exhaust valve of the engine (1) is opened.

10. An emission control system according to any one of claims 1 to 9, wherein the load detecting means (5, 28) detects the load, based on at least one of an output signal of an accelerator position sensor (28) and a flow rate of intake air that is detected by an air flow meter (5).

11. A method for purifying an exhaust gas emitted from an internal combustion engine (1) capable of operating in a lean-burn mode, the internal combustion engine (1) being provided with (a) a NOx absorbing catalyst (17) disposed in an exhaust passage (16) such that the NOx absorbing catalyst (17) absorbs NOx contained in the exhaust gas, and (b) a reductant supply device (12, 19, 20, 21, 22) disposed upstream of the NOx absorbing catalyst (17), for adding a reducing agent to the exhaust gas so as to release and reduce NOx absorbed in the NOx absorbing catalyst (17), comprising the steps of:
detecting a load of the internal combustion engine;
calculating an amount of the reducing agent that is added in one NOx releasing and reducing process, based on the load of the internal combustion engine (1); and
controlling addition of the reducing agent by executing a plurality of reductant adding operations so as to provide the calculated amount of the reducing agent,
**characterized in that**
an amount of the reducing agent added in each of the plurality of reductant adding operations is controlled such that the amount of the reducing agent added in each of second and subsequent reductant adding operations is made smaller than that of the reducing agent added in a first reductant adding operation.

12. A method according to claim 11, further comprising a step of determining whether it is possible to add the reducing agent, depending upon an operating state of a vehicle having the internal combustion engine (1).

13. A method according to any one of claims 10 to 12, wherein a period of time during which the reducing agent is added in each of the plurality of reductant adding operations is controlled such that the period of addition of the reducing agent in a first reductant adding operation is made longer than that of the reducing agent in each of second and subsequent reductant adding operations.

14. A method according to any one of claims 10 to 13, wherein a pressure at which the reducing agent is added in each of the plurality of reductant adding operations is controlled such that the pressure at which the reducing agent is added in a first reductant adding operation is made higher than that at which the reducing agent is added in each of second and subsequent reductant adding operations.

15. A method according to any one of claims 10 to 14, wherein an interval between two successive ones of the plurality of reductant adding operations is controlled such that the interval between first and second reductant adding operations is made shorter than that between subsequent reductant adding operations.

16. A method according to any one of claims 10 to 15, wherein second and subsequent ones of the plurality of reductant adding operations are controlled based on a controlled variable that is corrected based on an air-fuel ratio measured at around the NOx catalyst (17) after a first reductant adding operation is executed.

17. A method according to claim 16, wherein the controlled variable is a period of time during which the reducing agent is added in each of the plurality of reductant adding operations.

18. A method according to claim 10 or claim 11, wherein the plurality of reductant adding operations are executed at predetermined time intervals such that a predetermined amount of the reducing agent is added for a predetermined period of time in each of the reductant adding operations.

19. A method according to any one of claims 10 to 18, wherein the plurality of reductant adding operations are executed in accordance with a crank angle of the internal combustion engine (1), so that the reducing agent is added when an exhaust valve of the engine (1) is opened.

20. A method according to any one of claims 10 to 19, wherein the load of the internal combustion engine (1) is detected based on at least one of an output signal of an accelerator position sensor (28) and a flow rate of intake air that is detected by an air flow meter (5).

## Patentansprüche

1. Emissions-Steuersystem für eine interne Verbrennungskraftmaschine (1) mit einer mageren Verbrennung, umfassend (a) einen in einem Abgaskanal (16) der internen Verbrennungskraftmaschine (1) so angeordneten NOx-Absorptionskatalysator (17), dass der NOx-Absorptionskatalysator (17) das in einem Abgas enthaltene NOx absorbiert, und (b) eine Reduktionsmittelzuführeinrichtung (12, 19, 20, 21, 22), die stromaufwärts vom NOx-Absorptionskatalysator (17) zur Zugabe eines Reduktionsmittels zum Abgas angeordnet ist, um in dem NOx-Absorptionskatalysator (17) absorbiertes NOx freizugeben und zu reduzieren, weiter umfassend:
eine Lasterfassungseinrichtung (5, 28) zur Erfassung einer Last der internen Verbrennungskraftmaschine;
eine Berechnungseinrichtung zur Berechnung einer Reduktionsmittelmenge, die in einem NOx-Freigabe- und Reduktionsverfahren auf der Grundlage der Last der internen Verbrennungskraftmaschine (1) zugegeben wird; und
eine Steuereinrichtung zur Steuerung der Zugabe des Reduktionsmittels mittels Durchführung mehrerer Reduktionsmittelzugabeverfahren, so dass die berechnete Reduktionsmittelmenge bereitgestellt wird,
**dadurch gekennzeichnet, dass**
die Steuereinrichtung eine Reduktionsmittelmenge in jedem von mehreren Reduktionsmittelzugabeverfahren so zugibt, dass die in dem zweiten und den folgenden Reduktionsmittelzugabeverfahren zugegebene Reduktionsmittelmenge kleiner ist als das in einem ersten Reduktionsmittelzugabeverfahren zugegebene Reduktionsmittel.

2. Emissions-Steuersystem nach Anspruch 1, weiter umfassend eine Einrichtung zur Bestimmung, ob eine Reduktionsmittelmengenzugabe möglich ist, in Abhängigkeit eines Betriebszustandes des Fahrzeugs mit der internen Verbrennungskraftmaschine (1).

3. Emissions-Steuersystem nach einem der Ansprüche 1 oder 2, wobei die, Steuereinrichtung eine Zeitdauer steuert, während der Reduktionsmittel in jedem der mehreren Reduktionsmittelzugabeverfahren zugegeben wird, so dass die Zeitdauer der Reduktionsmittelzugabe in einem ersten Reduktionsmittelzugabeverfahren länger als die des Reduktionsmittels in jedem der zweiten und folgenden Reduktionsmittelzugabeverfahren ist.

4. Emissions-Steuersystem nach einem der Ansprüche 1 bis 3, wobei die Steuereinrichtung einen Druck steuert, bei dem Reduktionsmittel in jedem der mehreren Reduktionsmittelzugabeverfahren zugegeben wird, so dass der Druck, bei dem das Reduktionsmittel in einem ersten Reduktionsmittelzugabeverfahren zugegeben wird, höher als der ist, bei dem das Reduktionsmittel in jedem der zweiten und folgenden Reduktionsmittelzugabeverfahren zugegeben wird.

5. Emissions-Steuersystem nach einem der Ansprüche 1 bis 4, wobei die Steuereinrichtung ein Intervall zwischen zwei aufeinanderfolgenden der mehreren Reduktionsmittelzugabeverfahren steuert, so dass das Intervall zwischen dem ersten und zweiten Reduktionsmittelzugabeverfahren kürzer als das zwischen den folgenden Reduktionsmittelzugabeverfahren ist.

6. Emissions-Steuersystem nach einem der Ansprüche 1 bis 5, wobei die Steuereinrichtung das zweite und die folgenden Reduktionsmittelzugabeverfahren auf der Grundlage einer gesteuerten Variablen, die auf der Grundlage eines in der Umgebung des NOx-Absorptionskatalysators (17) gemessenen Luft-Kraftstoff-Verhältnisses nach der Durchführung eines ersten Reduktionsmittelzugabeverfahrens korrigiert.wird, steuert.

7. Emissions-Steuersystem nach einem der Ansprüche 1 bis 6, wobei die gesteuerte Variable eine Zeitdauer ist, während der das Reduktionsmittel in jedem der mehreren Reduktionsmittelzugabeverfahren zugegeben wird.

8. Emissions-Steuersystem nach Anspruch 1 oder 2, wobei mehrere Reduktionsmittelzugabeverfahren an vorbestimmten Zeitintervallen durchgeführt werden, so dass eine vorbestimmte Reduktionsmittelmenge für eine vorbestimmte Zeitdauer in jedem der Reduktionsmittelzugabeverfahren zugegeben wird.

9. Emissions-Steuersystem nach einem der Ansprüche 1 bis 8, wobei die Steuereinrichtung die mehreren Reduktionsmittelzugabeverfahren entsprechend einem Kurbelwellenwinkel der internen Verbrennungskraftmaschine (1) durchführt, so dass das Reduktionsmittel zugegeben wird, wenn ein Auslassventil der internen Verbrennungskraftmaschine (1) geöffnet ist.

10. Emissions-Steuersystem nach einem der Ansprüche 1 bis 9, wobei die Lasterfassungseinrichtung (5, 28) eine Last auf der Grundlage von mindestens einem Ausgangssignal eines Fahrpedalpositionssensors (28) und einer mittels eines Luftdurchflussmengenmessers (5) erfassten Ansaugluftdurchflussmenge erfasst.

11. Verfahren zur Reinigung eines von einer internen Verbrennungskraftmaschine (1) abgegebenen Abgases beim Betrieb mit magerer Verbrennung, wobei die interne Verbrennungskraftmaschine (1) mit (a) einem in einem Abgaskanal (16) angeordneten NOx-Absorptionskatalysator (17) versehen ist, so dass der NOx-Absorptionskatalysator (17) im Abgas enthaltenes NOx absorbiert, und (b) mit einer stromaufwärts vom NOx-Absorptionskatalysator (17) angeordneten Reduktionsmittelzugabeeinrichtung (12, 19, 20, 21, 22) zur Zugabe eines Reduktionsmittels zum Abgas versehen ist, so dass in dem NOx-Absorptionskatalysator (17) absorbiertes NOx freigegeben und reduziert wird, umfassend folgende Schritte:
Erfassen einer Last der internen Verbrennungskraftmaschine;
Berechnen einer Reduktionsmittelmenge, die in dem NOx-Freigabe- und Reduktionsverfahren zugegeben wird, auf der Grundlage der Last der internen Verbrennungskraftmaschine (1); und
Steuern der Reduktionsmittelzugabe mittels Durchführen von mehreren Reduktionsmittelzugabeverfahren, so dass eine berechnete Reduktionsmittelmenge bereitgestellt wird,
**dadurch gekennzeichnet, dass**
eine in jedem der mehreren Reduktionsmittelzugabeverfahren zugegebene Reduktionsmittelmenge so gesteuert wird, dass die in jedem zweiten und folgenden Reduktionsmittelzugabeverfahren zugegebene Reduktionsmittelmenge kleiner als das in einem ersten Reduktionsmittelzugabeverfahren zugegebene Reduktionsmittel ist.

12. Verfahren nach Anspruch 11, weiter umfassend einen Schritt zur Bestimmung, ob eine Reduktionsmittelzugabe möglich ist, in Abhängigkeit eines Betriebszustandes eines Fahrzeugs mit der internen Verbrennungskraftmaschine (1).

13. Verfahren nach einem der Ansprüche 10 bis 12, wobei eine Zeitdauer, während der Reduktionsmittel in jedem der mehreren Reduktionsmittelzugabeverfahren zugegeben wird, gesteuert wird, so dass die Zeitdauer der Reduktionsmittelzugabe in einem ersten Reduktionsmittelzugabeverfahren länger als die des Reduktionsmittels in jedem der zweiten und folgenden Reduktionsmittelzugabeverfahren ist.

14. Verfahren nach einem der Ansprüche 10 bis 13, wobei ein Druck, bei dem das Reduktionsmittel in jedem der mehreren Reduktionsmittelzugabeverfahren zugegeben wird, gesteuert wird, so dass der Druck, bei dem das Reduktionsmittel in dem ersten Reduktionsmittelzugabeverfahren zugegeben wird, höher als der ist, bei dem das Reduktionsmittel in jedem der zweiten und folgenden Reduktionsmittelzugabeverfahren zugegeben wird.

15. Verfahren nach einem der Ansprüche 10 bis 14, wobei ein Intervall zwischen den aufeinanderfolgenden der mehreren Reduktionsmittelzugabeverfahren gesteuert wird, so dass das Intervall zwischen dem ersten und zweiten Reduktionsmittelzugabeverfahren kürzer als das zwischen den folgenden Reduktionsmittelzugabeverfahren ist.

16. Verfahren nach einem der Ansprüche 10 bis 15, wobei das zweite und die folgenden der mehreren Reduktionsmittelzugabeverfahren auf der Grundlage einer gesteuerten Variablen, die auf der Grundlage eines Luft-Kraftstoff-Verhältnisses, gemessen in der Umgebung des NOx-Absorptionskatalysators (17) nach Durchführung eines ersten Reduktionsmittelzugabeverfahrens korrigiert wird, gesteuert werden.

17. Verfahren nach Anspruch 16, wobei die gesteuerte Variable eine Zeitdauer ist, während der das Reduktionsmittel in jedem der mehreren Reduktionsmittelzugabeverfahren zugegeben wird.

18. Verfahren nach Anspruch 10 oder 11, wobei die Reduktionsmittelzugabeverfahren bei vorbestimmten Zeitintervallen durchgeführt werden, so dass eine vorbestimmte Reduktionsmittelmenge für eine vorbestimmte Zeitdauer in jedem Reduktionsmittelzugabeverfahren zugegeben wird.

19. Verfahren nach einem der Ansprüche 10 bis 18, wobei die mehreren Reduktionsmittelzugabeverfahren entsprechend einem Kurbelwellenwinkel der internen Verbrennungskraftmaschine (1) durchgeführt werden, so dass das Reduktionsmittel zugegeben wird, wenn das Auslassventil der internen Verbrennungskraftmaschine (1) geöffnet ist.

20. Verfahren nach einem der Ansprüche 10 bis 19, wobei die Last der internen Verbrennungskraftmaschine (1) auf der Grundlage von mindestens einem Ausgangssignal eines Fahrpedalpositionssensors (28) und einer mittels eines Luftdurchflussmessers (5) erfassten Ausgangsluftdurchflussmenge erfasst wird.

## Revendications

1. Système de commande d'émission d'un moteur à combustion interne (1) capable de fonctionner sous un mode à charge stratifiée, comprenant (a) un catalyseur absorbant le NOx (17), disposé dans une sortie d'échappement (16) du moteur à combustion interne (1), de sorte que le catalyseur absorbant le NOx (17) absorbe le NOx contenu dans un gaz d'échappement, et (b) des moyens d'alimentation en réducteur (12, 19, 20, 21, 22), disposés en amont du catalyseur absorbant le NOx (17), pour ajouter un agent réducteur au gaz d'échappement, de manière à libérer et à réduire le NOx absorbé dans le catalyseur absorbant le NOx (17), comprenant en outre:
des moyens de détection de charge (5, 28), destinés à détecter une charge du moteur à combustion interne;
un moyen de calcul, destiné à calculer une quantité de l'agent réducteur qui est ajoutée lors d'un processus de libération et de réduction de NOx, sur la base de la charge du moteur à combustion interne (1); et
un moyen de commande, destiné à commander l'ajout de l'agent réducteur, en exécutant une pluralité d'opérations d'ajout de réducteur, de manière à délivrer la quantité calculée de l'agent réducteur;
**caractérisé en ce que**:
le moyen de commande commande une quantité de l'agent réducteur, ajoutée lors de chaque opération parmi la pluralité d'opérations d'ajout de réducteur, de sorte que la quantité de l'agent réducteur ajoutée lors de la deuxième opération et de chacune des opérations suivantes d'ajout de réducteur est rendue inférieure à celle de l'agent réducteur ajoutée lors d'une première opération d'ajout de réducteur.

2. Système de commande d'émission, selon la revendication 1, comprenant en outre, un moyen pour déterminer s'il est possible d'ajouter l'agent réducteur, en fonction d'un état de fonctionnement d'un véhicule comprenant le moteur à combustion interne (1).

3. Système de commande d'émission, selon l'une quelconque des revendications 1 ou 2, dans lequel le moyen de commande commande un intervalle de temps, pendant lequel l'agent réducteur est ajouté lors de chaque opération parmi la pluralité d'opérations d'ajout de réducteur, de sorte que l'intervalle de temps d'ajout de l'agent réducteur, lors d'une première opération d'ajout de réducteur est rendue plus longue que celle de l'agent réducteur, lors de la deuxième opération et de chacune des opérations suivantes d'ajout de réducteur.

4. Système de commande d'émission, selon l'une quelconque des revendications 1 à 3, dans lequel le moyen de commande commande une pression à laquelle l'agent réducteur est ajouté, lors de chaque opération parmi la pluralité d'opérations d'ajout de réducteur, de sorte que la pression à laquelle l'agent réducteur est ajouté, lors d'une première opération d'ajout de réducteur, est rendue supérieure à celle à laquelle l'agent réducteur est ajouté, lors de la deuxième opération et de chacune des opérations suivantes d'ajout de réducteur.

5. Système de commande d'émission, selon l'une quelconque des revendications 1 à 4, dans lequel le moyen de commande commande un intervalle entre deux opérations successives parmi la pluralité d'opérations d'ajout de réducteur, de sorte que l'intervalle entre la première et la deuxième opération d'ajout de réducteur est rendu plus court que celui entre des opérations suivantes d'ajout de réducteur.

6. Système de commande d'émission, selon l'une quelconque des revendications 1 à 5, dans lequel le moyen de commande commande la deuxième opération et les opérations suivantes parmi la pluralité d'opérations d'ajout de réducteur, sur la base d'une grandeur réglée qui est corrigée sur la base d'un rapport air/carburant mesuré autour du catalyseur de NOx (17), après qu'une première opération d'ajout de réducteur s'est exécutée.

7. Système de commande d'émission, selon l'une quelconque des revendications 1 à 6, dans lequel la grandeur réglée est un intervalle de temps pendant lequel l'agent réducteur est ajouté à chaque opération parmi la pluralité d'opérations d'ajout de réducteur.

8. Système de commande d'émission, selon la revendication 1 ou 2, dans lequel la pluralité d'opérations d'ajout de réducteur s'exécute à des intervalles de temps prédéterminés, de sorte qu'une quantité prédéterminée de l'agent réducteur est ajoutée pendant un intervalle de temps prédéterminé, lors de chacune des opérations d'ajout de réducteur.

9. Système de commande d'émission, selon l'une quelconque des revendications 1 à 8, dans lequel le moyen de commande exécute la pluralité d'opérations d'ajout de réducteur, en conformité avec une position du vilebrequin du moteur à combustion interne (1), de sorte que l'agent réducteur est ajouté lorsqu'une soupape d'échappement du moteur (1) est ouverte.

10. Système de commande d'émission, selon l'une quelconque des revendications 1 à 9, dans lequel le moyen de détection de charge (5, 28) détecte la charge, sur la base d'au moins un signal de sortie d'un capteur de position de la pédale d'accélérateur (28) ou un débit d'air d'admission qui est détecté par un débitmètre d'air (5).

11. Procédé pour purifier un gaz d'échappement émis à partir d'un moteur à combustion interne (1) capable de fonctionner sous un mode à charge stratifiée, le moteur à combustion interne (1) étant doté (a) d'un catalyseur absorbant le NOx (17), disposé dans une sortie d'échappement (16), de sorte que le catalyseur absorbant le NOx (17) absorbe le NOx contenu dans le gaz d'échappement, et (b) d'un dispositif d'alimentation en réducteur (12, 19, 20, 21, 22), disposés en amont du catalyseur absorbant le NOx (17), pour ajouter un agent réducteur au gaz d'échappement, de manière à libérer et à réduire le NOx absorbé dans le catalyseur absorbant le NOx (17), comprenant les étapes consistant à:
détecter une charge du moteur à combustion interne;
calculer une quantité de l'agent réducteur qui est ajoutée lors d'un processus de libération et de réduction du NOx, sur la base de la charge du moteur à combustion interne (1); et
commander l'ajout de l'agent réducteur, en exécutant une pluralité d'opérations d'ajout de réducteur, de manière à délivrer la quantité calculée de l'agent réducteur; **caractérisé en ce que**:
une quantité de l'agent réducteur, ajoutée lors de chaque opération parmi la pluralité d'opérations d'ajout de réducteur, est commandée de telle sorte que la quantité de l'agent réducteur ajoutée lors de la deuxième opération et de chacune des opérations suivantes d'ajout de réducteur est rendue inférieure à celle de l'agent réducteur ajoutée lors d'une première opération d'ajout de réducteur.

12. Procédé selon la revendication 11, comprenant en outre, une étape consistant à déterminer s'il est possible d'ajouter l'agent réducteur, sur la base d'un état de fonctionnement d'un véhicule comprenant le moteur à combustion interne (1).

13. Procédé selon l'une quelconque des revendications 10 à 12, dans lequel un intervalle de temps pendant lequel l'agent réducteur est ajouté, lors de chaque opération parmi la pluralité d'opérations d'ajout de réducteur, est commandé de telle sorte que l'intervalle de temps d'ajout de l'agent réducteur, lors d'une première opération d'ajout de réducteur est rendu plus long que celui de l'agent réducteur, lors de la deuxième opération et de chacune des opérations suivantes d'ajout de réducteur.

14. Procédé selon l'une quelconque des revendications 10 à 13, dans lequel une pression à laquelle l'agent réducteur est ajouté, lors de chaque opération parmi la pluralité d'opérations d'ajout de réducteur, est commandée de telle sorte que la pression à laquelle l'agent réducteur est ajouté, lors d'une première opération d'ajout de réducteur est rendue supérieure à celle à laquelle l'agent réducteur est ajouté, lors de la deuxième opération et de chacune des opérations suivantes d'ajout de réducteur.

15. Procédé selon l'une quelconque des revendications 10 à 14, dans lequel un intervalle de temps entre deux opérations successives parmi la pluralité d'opérations d'ajout de réducteur, est commandé de telle sorte que l'intervalle entre la première et la deuxième opération d'ajout de réducteur est rendu plus court que celui entre des opérations suivantes d'ajout de réducteur.

16. Procédé selon l'une quelconque des revendications 10 à 15, dans lequel la deuxième opération et les opérations suivantes parmi la pluralité d'opérations d'ajout de réducteur, sont commandées sur la base d'une grandeur réglée qui est corrigée sur la base d'un rapport air/carburant mesuré autour du catalyseur absorbant le NOx (17), après qu'une première opération d'ajout de réducteur s'est exécutée.

17. Procédé selon la revendication 16, dans lequel la grandeur réglée est un intervalle de temps pendant lequel l'agent réducteur est ajouté, lors de chaque opération parmi la pluralité d'opérations d'ajout de réducteur.

18. Procédé selon la revendication 10 ou la revendication 11, dans lequel la pluralité d'opérations d'ajout de réducteur s'exécute à des intervalles de temps prédéterminés, de sorte qu'une quantité prédéterminée de l'agent réducteur est ajoutée pendant un intervalle de temps prédéterminé, lors de chacune des opérations d'ajout de réducteur.

19. Procédé selon l'une quelconque des revendications 10 à 18, dans lequel la pluralité d'opérations d'ajout de réducteur s'exécute en conformité avec une position du vilebrequin du moteur à combustion interne (1), de sorte que l'agent réducteur est ajouté lorsqu'une soupape d'échappement du moteur (1) est ouverte.

20. Procédé selon l'une quelconque des revendications 10 à 19, dans lequel la charge du moteur à combustion interne (1) est détectée sur la base d'au moins un signal de sortie d'un capteur de position dé pédale d'accélérateur (28) ou un débit d'air d'admission qui est détecté par un débitmètre d'air (5).
